# EUROPÄISCHE PATENTSCHRIFT

(11) **EP 2 364 790 B1**
(45) Veröffentlichungstag und Bekanntmachung des Hinweises auf die Patenterteilung: **17.07.2013**
(21) Anmeldenummer: 11001560.9
(22) Anmeldetag: 25.02.2011
(51) Int. Cl.: B21D 39/04

(54) **Verfahren zum Verbinden eines Endabschnitts einer Leitung**
Method for connecting an end section of a pipe
Procédé de liaison d'une section terminale d'une conduite

(30) Priorität: 12.03.2010 AT 4092010
(43) Veröffentlichungstag der Anmeldung: 14.09.2011
(73) Patentinhaber: Henn GmbH & Co.KG, 6850 Dornbirn (AT)
(72) Erfinder: Hartmann, Harald, 6850 Dornbirn (AT); Bachmann, Werner, 6971 Hard (AT)
(74) Vertreter: Burger, Hannes

(56) Entgegenhaltungen:
- DE-A1-102005 043 140
- US-A- 4 220 034

## Beschreibung

Die Erfindung bezieht sich auf ein Verfahren zum Verbinden eines Endabschnitts einer Leitung für flüssige oder gasförmige Medien mit einem Steckverbinder, wobei ein erster Wandabschnitt des Steckverbinders unter Verformung des zwischen dem ersten und einem zweiten Wandabschnitt des Steckverbinders liegenden Endabschnitts der Leitung mit einem Drückwerkzeug in Richtung zum zweiten Wandabschnitt verformt wird. Weiters bezieht sich die Erfindung auf eine Vorrichtung zum Verbinden eines Endabschnitts einer Leitung für flüssige oder gasförmige Medien mit einem Steckverbinder, der einen ersten Wandabschnitt und einen zweiten Wandabschnitt aufweist, zwischen denen der Endabschnitt der Leitung befestigbar ist, umfassend ein Drückwerkzeug zum Verformen des ersten Wandabschnitts in Richtung zum zweiten Wandabschnitt unter Verformung des zwischen dem ersten und dem zweiten Wandabschnitt liegenden Endabschnitts der Leitung.

Der Anschluss eines Endabschnitts einer medienführenden Leitung an einen Steckverbinder, der auch als Schlauchkupplung bezeichnet werden kann, wird häufig dadurch realisiert, dass der Endabschnitt der Leitung in einen Ringraum zwischen zwei hülsenförmigen Wandabschnitten des Steckverbinders eingeschoben wird, worauf der Endabschnitt der Leitung zwischen den beiden Wandabschnitten durch Eindrücken (Verpressen) zumindest eines der Wandabschnitte in Richtung zum anderen Wandabschnitt eingequetscht wird und hierbei verformt wird. Es ist hierbei eine Verformung des äußeren Wandabschnitts in Richtung zum inneren Wandabschnitt und/oder eine Verformung des inneren Wandabschnitts in Richtung zum äußeren Wandabschnitt bekannt, wobei die Verformung insbesondere in Form einer ringförmigen Verpressnut ausgebildet sein kann.

Bei solchen herkömmlichen Leitungsanschlüssen sind für den Eindrück- bzw. Verpressvorgang Wegregelungen, Kraftregelungen und Kombinationen von Kraft- und Wegregelungen bekannt. Bei der bekannten Wegregelung werden die Drückteile des Drückwerkzeuges zum Verformen des betreffenden Wandabschnitts um einen vorgegebenen konstanten Weg verfahren. Dieser fixe Weg wird in Abhängigkeit vom Steckverbinder und vom Leitungstyp eingestellt. Ein Nachteil der Wegregelung ist es, dass die Verformung des Wandabschnitts unabhängig von vorhandenen Toleranzen z.B. des Endabschnitts der Leitung durchgeführt wird und die Sicherheit der Verbindung zwischen der Leitung und dem Steckverbinder damit auf Grund vorhandener Toleranzen, insbesondere Toleranzen in der Wandstärke und dem Durchmesser des Endabschnitts der Leitung aber auch Toleranzen des Steckverbinders, beeinträchtigt sein.

Bekannt sind weiters Kraftregelungen für die ausgeübte Verformungskraft und kombinierte Kraft/Weg-Regelungen. Bei Regelungen, die (auch) die Verformungskraft als Regelgröße beinhalten, besteht das Problem der Komplexheit des Systems mit vielfältigen Einflussfaktoren. Neben der Härte des Materials der Leitung und der Härte des zu verformenden Materials des Steckverbinders, welche ebenfalls variieren kann, gehen auch die Tribologie zwischen dem Steckverbinder und dem Drückwerkzeug und zwischen dem Steckverbinder und der Leitung ein (insbesondere auf Grund der bei der Verformung der Leitung auftretenden Materialverdrängungen). Auch hängt beispielsweise die Härte des Leitungsmaterials von der Umgebungstemperatur ab. Auf Grund der vielfältigen Einflussfaktoren können auch bei solchen Kraft- oder Kraft/Weg-Regelungen die Ergebnisse deutlich variieren.

Eine Verpressung eines Steckverbinders mit einem Endabschnitt einer Leitung, bei welcher die Presskraft in Abhängigkeit vom Weg auf unterschiedliche Werte geregelt wird (=wegabhängige Kraftregelung), geht aus der DE 10 2005 043 140 A1 hervor. Der Endabschnitt der Leitung wird in eine Ringraum zwischen dem inneren hülsenförmigen ersten Wandabschnitt und dem äußeren hülsenförmigen zweiten Wandabschnitt eingesteckt, worauf mit einem Spreizwerkzeug der erste Wandabschnitt von innen her in Richtung zum äußeren Wandabschnitt gegen den im Ringraum zwischen den beiden Wandabschnitten eingesteckten Endabschnitt der Leitung eingedrückt wird, wobei eine ringförmig umlaufende Pressnut im ersten Wandabschnitt ausgebildet wird. Zur Kontrolle, ob der Endabschnitt der Leitung vollständig in den Ringraum eingeschoben ist, ist der äußere zweite Wandabschnitt mit Fensteröffnungen versehen.

Aufgabe der Erfindung ist es ein Verfahren bzw. eine Vorrichtung der eingangs genannten Art bereitzustellen, bei dem in einfacher Weise eine zuverlässige Verbindung des Steckverbinders mit dem Endabschnitt der Leitung, an der der Steckverbinder anzuschließen ist, ermöglicht wird. Erfindungsgemäß gelingt dies durch ein Verfahren mit den Merkmalen des Anspruchs 1 bzw. durch eine Vorrichtung mit den Merkmalen des Anspruchs 10.

Beim Verfahren bzw. bei der Vorrichtung gemäß der Erfindung wird mindestens eine Abstandsmesseinrichtung eingesetzt, mit welcher durch die Fensteröffnung bzw. durch die betreffende Fensteröffnung hindurch die Oberfläche der Leitung erfasst wird, welche der Fensteröffnung zugewandt ist, durch die hindurch die Messung erfolgt. Die Verformung des ersten Wandabschnitts wird in Abhängigkeit vom Ergebnis dieser Messung durchgeführt. Hierdurch können Toleranzen beispielsweise der Wandstärke des Endabschnitts der Leitung ausgeglichen werden, wodurch die Zuverlässigkeit der Verbindung des Endabschnitts der Leitung mit dem Steckverbinder verbessert werden kann.

Die Verformung des ersten Wandabschnitts (das Verpressen des ersten Wandabschnitts) zum Verbinden mit dem Endabschnitt der Leitung kann vorteilhafterweise von innen nach außen durchgeführt werden. Der erste Wandabschnitt ist also der innere der beiden Wandabschnitte, wird also vom zweiten Wandabschnitt (und dem Endabschnitt der Leitung) umgeben und das Verformen des ersten Wandabschnitts wird mit einem Spreizwerkzeug durch Auseinanderspreizen von Spreizteilen (Spreizbacken) durchgeführt, die in den vom ersten Wandabschnitt umgebenen Raum eingeführt werden. Andererseits kann die Verformung des ersten Wandabschnitts auch von außen nach innen erfolgen, d.h. der erste Wandabschnitt ist also der äußere der beiden Wandabschnitte, umgibt also den zweiten Wandabschnitt (und den Endabschnitt der Leitung) und die an die äußere Oberfläche des ersten Wandabschnitts angesetzten Drückteile des Drückwerkzeugs wirken in Richtung zur zentralen Längsachse des Steckverbinders.

Die Verformung des ersten Wandabschnitts erfolgt in einem vorteilhaften Ausführungsbeispiel der Erfindung nur über einen Teil der axialen, d.h. in Richtung der zentralen Längachse des Steckverbinders gemessenen, Erstreckung des ersten Wandabschnitts, es wird in den ersten Wandabschnitt also eine Eindrückung (=Vertiefung bzw. Einbuchtung) eingebracht. Vorzugsweise ist diese Eindrückung um den Umfang des 1. Wandabschnitts umlaufend ausgebildet, also in Form einer ringförmigen Verpressnut. Der erste Wandabschnitt kann hierbei starr mit dem zweiten Wandabschnitt verbunden sein (durch eine einstückige Ausbildung oder durch eine starre Verbindung von zwei eigenen Teilen) oder von einem separaten Teil, das in Form einer Hülse oder eines Rings ausgebildet ist, gebildet werden.

In einem anderen möglichen Ausführungsbeispiel kann der erste Wandabschnitt, der in Form einer separaten Hülse bzw. eines separaten Rings ausgebildet ist, vom Drückwerkzeug über seine gesamte axiale Ausdehnung verformt werden, also in seinem Durchmesser insgesamt verkleinert (wenn der erste Wandabschnitt den zweiten Wandabschnitt umgibt) oder vergrößert (wenn der zweite Wandabschnitt den ersten Wandabschnitt umgibt) werden.

Durch die Verformung des ersten Wandabschnitts in Richtung zum zweiten Wandabschnitt wird auch der Endabschnitt der Leitung im Bereich der Verformung des ersten Wandabschnitts verformt, da der Abstand zwischen den beiden Wandabschnitten in diesem Bereich auf einen Wert verringert wird, der kleiner als die ursprüngliche Wandstärke des Endabschnitts der Leitung ist. Somit ragt der verformte erste Wandabschnitt (im Bereich seiner Eindrückung oder über seine gesamte axiale Länge) in eine Querschnittsverjüngung des Endabschnitts der Leitung und es wird eine (auch) formschlüssige Halterung des Endabschnitts der Leitung zwischen dem ersten und dem zweiten Wandabschnitt ausgebildet.

Vorzugsweise wird der Steckverbinder bereits vor der mit der Abstandsmesseinrichtung erfolgenden Erfassung der Oberfläche des Endabschnitts der Leitung durch die Fensteröffnung hindurch auf das Drückwerkzeug aufgeschoben (bei einer Verformung von innen nach außen) oder in das Drückwerkzeug eingeschoben (bei einer Verformung von außen nach innen). Die mindestens eine Messung mit der Abstandsmesseinrichtung wird also, auch wenn diese Messung vor dem Verformen des ersten Wandabschnitts durchgeführt wird, in der Bearbeitungsstation ausgeführt, in welcher die Verformung des ersten Wandabschnitts mit dem Drückwerkzeug durchgeführt wird.

In einer ersten Ausführungsform der Erfindung wird die Messung mit der Abstandsmesseinrichtung durch die Fensteröffnung hindurch beim Verformen des ersten Wandabschnitts durchgeführt, und zwar wiederholt oder kontinuierlich, und hierbei die Bewegung der Oberfläche des Endabschnitts der Leitung erfasst. Insbesondere wird aus der Erfassung der Bewegung der Weg ermittelt, den die Oberfläche zwischen zwei Messungen zurückgelegt hat, also die Geschwindigkeit der Oberfläche.

Beim Verformen des ersten Wandabschnitts wird mindestens ein Drückteil des Drückwerkzeuges über einen Verformungsweg verfahren. Die mindestens eine Fensteröffnung, durch die die der Fensteröffnung zugewandte Oberfläche der Leitung mit der mindestens einen Abstandsmesseinrichtung erfasst wird, befindet sich in der ersten Ausführungsform der Erfindung im zweiten Wandabschnitt.

Gemäß einer ersten Variante der ersten Ausführungsform der Erfindung wird durch die Erfassung der Bewegung der Oberfläche des Endabschnitts der Leitung ein Punkt im Verformungsweg (=Referenzpunkt) ermittelt, an welchem die Oberfläche der Leitung gerade zur Anlage im Bereich um die Fensteröffnung am zweiten Wandabschnitt gelangt. Der Referenzpunkt gibt den Punkt im Verformungsweg an, an dem gegebenenfalls vor dem Verformen vorhandene Spalte zwischen der Leitung und dem ersten und/oder zweiten Wandabschnitt geschlossen worden sind und ab diesem Referenzpunkt kommt es bei der weiteren Verformung des ersten Wandabschnitts zur Verquetschung der Leitung zwischen dem ersten und dem zweiten Wandabschnitt, d.h. der Abstand zwischen dem ersten und dem zweiten Wandabschnitt wird den Bereich der Verformung des ersten Wandabschnitts auf einen Wert verringert, der kleiner als die ursprüngliche Wandstärke des Endabschnitts der Leitung ist. Ab diesem mit der Messeinrichtung bestimmten Punkt des Verformungsweges wird eine Wegsteuerung bzw. Wegregelung für das (jeweilige) Drückteil beim weiteren Verformen des ersten Wandabschnitts durchgeführt. Der erste Wandabschnitt kann hierbei beispielsweise nach Erreichen des Referenzpunktes noch um eine vorgegebene, d.h. vor der Verformung des ersten Wandabschnitts festgelegte, Wegstrecke des Verformungsweges verformt werden, indem das (jeweilige) Drückteil um diese vorgegebene Wegstrecke verfahren wird. Beispielsweise kann die vorgegebene Wegstrecke auf einen Wert gesetzt werden, der von der nominalen Wandstärke des Endabschnitts der Leitung abhängt und hierbei vorzugsweise mindestens 30% der nominalen Wandstärke des Endabschnitts der Leitung beträgt. So kann z.B. bei einer nominalen Wandstärke des Endabschnitts der Leitung von 2mm der Verformungsweg ab dem Referenzpunkt auf 1 mm festgesetzt werden, bei einer nominalen Wandstärke von 4mm auf 2mm. Auch eine Festsetzung auf einen anderen vorgegebenen Wert ist denkbar und möglich. So könnte beispielsweise der Verformungsweg ab dem Referenzpunkt auf einen Wert in Abhängigkeit vom radialen Abstand zwischen dem ersten und dem zweiten Wandabschnitt vor der Verformung des ersten Wandabschnitts gesetzt werden, vorzugsweise auf mindestens 20% des radialen Abstands zwischen dem ersten und zweiten Wandabschnitt vor der Verformung des ersten Wandabschnitts. Andererseits könnte der Verformungsweg, um den das (jeweilige) Drückteil ab dem Referenzpunkt verfahren wird, auf einen während der Verformung des ersten Wandabschnitts bestimmten Wert gesetzt werden, insbesondere in Abhängigkeit von der Lage des festgelegten Referenzpunktes. So kann bei vorbekanntem radialen Abstand zwischen dem ersten und dem zweiten Wandabschnitt (vor der Verformung des ersten Wandabschnitts) aus der Lage des Referenzpunktes die Wandstärke des Endabschnitts der konkret eingesetzten Leitung (zumindest näherungsweise) ermittelt werden und der Verformungsweg ab dem Referenzpunkt auf einen vorgegebenen Prozentsatz der ermittelten Wandstärke gesetzt werden, vorzugsweise auf einen Prozentsatz von mindestens 30% der ermittelten Wandstärke des Endabschnitts der Leitung.

In einer zweiten Variante der ersten Ausführungsform wird durch die mindestens eine im zweiten Wandabschnitt angeordnete Fensteröffnung die Bewegung der Oberfläche der Leitung erfasst und hierbei ein Punkt im Verformungsweg ermittelt (=Referenzpunkt), an welchem sich die der Fensteröffnung zugewandte Oberfläche des Endabschnitts der Leitung synchron zum Drückteil bewegt, welches die Leitung im Bereich der mit der Abstandsmesseinrichtung erfolgenden Messung verformt. Diese Bewegung "synchron zum Drückteil" bedeutet, dass die Oberfläche der Leitung zwischen zwei aufeinanderfolgenden Messungen den gleichen Weg wie das Drückteil zurücklegt, d.h. sich mit der gleichen Geschwindigkeit bewegt. An diesem Referenzpunkt des Verformungsweges wird mittels der Abstandsmesseinrichtung der Ort (=die radiale Lage der erfassten Stelle) der der Fensteröffnung zugewandten Oberfläche des Endabschnitts der Leitung erfasst. Der Referenzpunkt gibt in diesem Fall den Punkt im Verformungsweg an, an welchem ein gegebenenfalls vor der Verformung vorhandener Spalt zwischen dem ersten Wandabschnitt und dem Endabschnitt der Leitung geschlossen ist, der erste Wandabschnitt also am Endabschnitt der Leitung anliegt. Durch die Erfassung des Ortes der Oberfläche der Leitung an diesem Referenzpunkt wird der Abstand der Oberfläche der Leitung von der der Leitung zugewandten Oberfläche des zweiten Wandabschnitts bestimmt. Es kann hierbei von einer konstanten Lage des zweiten Wandabschnitts ausgegangen werden, d.h. dessen Toleranzen als vernachlässigbar angesehen werden, oder der Ort (=die radiale Lage der erfassten Stelle) der der Abstandsmesseinrichtung zugewandten Oberfläche des zweiten Wandabschnitts wird gemessen und der Ort der der Leitung zugewandten Oberfläche des zweiten Wandabschnitts wird daraus mit sehr geringen Toleranzen (da die Dicke des zweiten Wandabschnitts mit nur geringen Toleranzen behaftet ist) bestimmt. Die Wegstrecke, über die das Drückteil ab dem Referenzpunkt verfahren wird, hängt vom erfassten Ort der Oberfläche der Leitung ab. Diese Wegstrecke beträgt hierbei den Abstand der Oberfläche der Leitung von der Oberfläche des zweiten Wandabschnitts plus einer weiteren Wegstrecke, über die die Verquetschung des Endabschnitts der Leitung zwischen dem ersten und dem zweiten Wandabschnitt erfolgt. Bei dieser weiteren Wegstrecke kann es sich analog wie bei der in der ersten Variante der ersten Ausführungsform ab dem dortigen Referenzpunkt insgesamt zurückzulegenden Wegstrecke um einen vorgegebenen Wert (der vorzugsweise mindestens 30% der nominalen Wandstärke des Endabschnitts beträgt) oder um einen während des Verformens des ersten Wandabschnitts bestimmten Wert (der vorzugsweise mindestens 30% der ermittelten Wandstärke des Endabschnitts beträgt) handeln. Als Wert für diese weitere Wegstrecke kann der gleiche Wert wie für die bei der ersten Variante der ersten Ausführungsform erläuterte insgesamte Wegstrecke ab dem dortigen Referenzpunkt vorgegeben oder bestimmt werden.

In einer zweiten Ausführungsform der Erfindung wird die Messung mit der Abstandsmesseinrichtung durch die Fensteröffnung hindurch vor dem Verformen des ersten Wandabschnitts durchgeführt und hierbei der Ort (=die radiale Lage der erfassten Stelle) der der Fensteröffnung zugewandten Oberfläche des Endabschnitts der Leitung erfasst. Die Leitung wird in dieser Ausführungsform vorzugsweise unter Vorspannung auf den innen liegenden Wandabschnitt aufgeschoben (vor der Erfassung der Oberfläche der Leitung mittels der Abstandmesseinrichtung). Der innenliegende Wandabschnitt kann hierbei der zu verformende Wandabschnitt sein (also der erste Wandabschnitt) und die Fensteröffnung kann im außenliegenden zweiten Wandabschnitt angeordnet sein. Andererseits kann der zu verformende Wandabschnitt auch der äußere Wandabschnitt sein, der damit also der erste Wandabschnitt ist, und die mindestens eine Fensteröffnung, durch die hindurch die Erfassung der Oberfläche der Leitung erfolgt, befindet sich ebenfalls in diesem ersten Wandabschnitt und der innere Wandabschnitt, auf den die Leitung aufgeschoben ist, ist der zweite Wandabschnitt.

Durch das Aufschieben der Leitung unter Vorspannung ist sichergestellt, dass die Leitung zu Beginn der Verformung am innenliegenden Wandabschnitt anliegt. Anhand der Erfassung der Oberfläche des Endabschnitts der Leitung mittels der Abstandsmesseinrichtung wird der Abstand der Oberfläche der Leitung vom außenliegenden Wandabschnitt bestimmt, und zwar in analoger Weise wie zuvor im Zusammenhang mit der zweiten Ausführungsvariante des ersten Ausführungsbeispiels beschrieben, also unter Annahme einer konstanten Abmessung des außenliegenden Wandabschnitts oder unter Bestimmung des Orts der der Abstandsmesseinrichtung zugewandten Oberfläche des außenliegenden Wandabschnitts. Der gesamte Verformungsweg, über den das (jeweilige) Drückteil des Drückwerkzeuges beim Verformen des ersten Wandabschnitts verfahren wird, wird dann auf diesen Abstand plus einer weiteren Wegstrecke festgelegt, die vorgegeben ist oder vom ermittelten Abstand zwischen dem Endabschnitt der Leitung und dem außenliegenden Wandabschnitt abhängt. Falls die Wegstrecke vorgegeben ist, so kann die Größe dieser Wegstrecke gleich wie die im Zusammenhang mit der ersten Variante der ersten Ausführungsform erläuterte vorgegebene insgesamte Wegstrecke ab dem Referenzpunkt gewählt werden, also z.B. auf einen Wert von mindestens 30% der nominalen Wandstärke des Endabschnitts gesetzt werden. Falls die Wegstrecke in Abhängigkeit vom ermittelten Abstand festgelegt wird, so kann aus dem ermittelten Abstand die Wandstärke des Endabschnitts der konkret eingesetzten Leitung ermittelt werden (zumindest nährungsweise; der äußere Durchmesser des inneren Wandabschnittes wird hierbei als konstant angenommen und ist somit vorgegeben) und die Wegstrecke auf einen vorgegebenen Prozentsatz der ermittelten Wandstärke gesetzt werden, vorzugsweise auf einen Prozentsatz von mindestens 30% der ermittelten Wandstärke des Endabschnitts der Leitung.

Wenn in dieser Schrift von "außen" und "innen" die Rede ist, so ist dies auf die Lage relativ zur zentralen Längsachse des Steckverbinders bezogen. Ein weiter außen liegendes Teil weist somit einen größeren Abstand von der zentralen Längsachse als ein weiter innen liegendes Teil auf.

Weitere Vorteile und Einzelheiten der Erfindung werden im Folgenden anhand der beiliegenden Zeichnung erläutert. In dieser zeigen:
Fig. 1 eine Schrägsicht eines Steckverbinders mit einem mit diesem zu verbindenden Endabschnitt einer Leitung, im getrennten Zustand;
Fig. 2 eine stirnseitige Ansicht des Steckverbinders von Fig. 1;
Fig. 3 einen Schnitt entlang der Linie AA von Fig. 2;
Fig. 4 einen mit dem in den Fig. 1-3 dargestellten Steckverbinder zusammensteckbaren Stutzen, in Schrägsicht;
Fig. 5 eine Ansicht von Drückteilen eines Drückwerkzeugs zum Verformen des ersten Wandabschnitts, mit dem aufgesteckten Steckverbinder und der Abstandsmesseinrichtung, Blickrichtung B in Fig. 6;
Fig. 6 einen Schnitt entlang der Linie CC von Fig. 5;
Fig. 7 eine Darstellung analog Fig. 5 nach dem Beginn des Verformens des ersten Wandabschnitts;
Fig. 8 einen Schnitt entlang der Linie DD von Fig. 7 (der Endabschnitt der Leitung noch nicht am zweiten Wandabschnitt anliegend);
Fig. 9 und 10 Darstellungen analog Fig. 7 und 8, der Anlagepunkt des Endabschnitts der Leitung am zweiten Wandabschnitt erreicht;
Fig. 11 ein vergrößertes Detail F von Fig. 10;
Fig. 12 und 13 Darstellungen analog Fig. 9 und 10, das Verformen des ersten Wandabschnitts abgeschlossen;
Fig. 14 ein vergrößertes Detail A von Fig. 13;
Fig. 15 eine stirnseitige Ansicht eines Steckverbinders im fertiggestellten Zustand der Verbindung mit dem Endabschnitt der Leitung;
Fig. 16 einen Schnitt entlang der Linie II von Fig. 15.

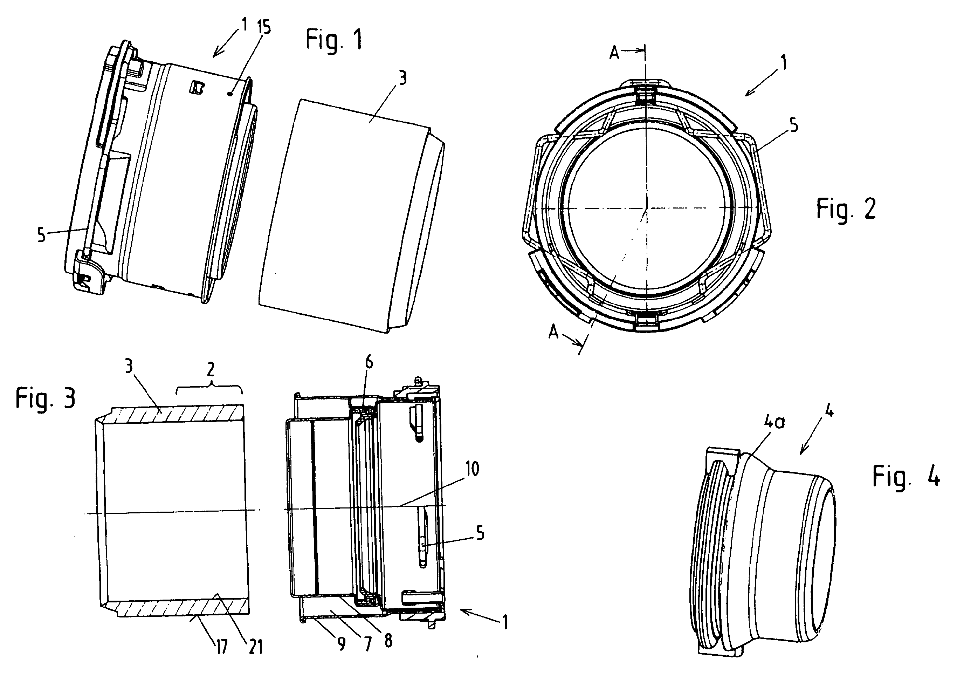

Eine erste Ausführungsform der Erfindung wird im Folgenden anhand der Fig. 1 bis 16 beschrieben.

Der Steckverbinder 1 ist an die Leitung 3 anzuschließen. Diese kann von einem mehr oder weniger flexiblen Schlauch oder einem im Wesentlichen starren Rohr gebildet werden und dient zur Führung von flüssigen oder gasförmigen Medien. In den Fig. 1-3 sind der Steckverbinder 1 und die Leitung 3 im getrennten Zustand dargestellt.

Der Steckverbinder 1 ist mit einem in Fig. 4 dargestellten Gegensteckverbinder zusammensteckbar. Der stutzenförmige, einen inneren Durchgangskanal aufweisende Gegensteckverbinder 4 wird hierzu von einer Einsteckseite her in die Einstecköffnung des Steckverbinders 1 eingesteckt. Im gezeigten Ausführungsbeispiel sind der Steckverbinder 1 und der Gegensteckverbinder 4 im zusammengesteckten Zustand durch eine Rastfeder 5 des Steckverbinders 1, die mit einer Rastschulter 4a des Gegensteckverbinders 4 zusammenwirkt, miteinander verrastet. Eine in einer Dichtungsnut des Steckverbinders 1 angeordnete Dichtung 6 dichtet den Steckverbinder 1 gegenüber dem Gegensteckverbinder 4 ab. Die Dichtung 6 könnte in einer anderen möglichen Ausführungsform auch am Gegensteckverbinder 4 gehalten sein.

Am von der Einsteckseite abgelegenen Ende weist der Steckverbinder 1 einen Ringraum 7 auf, der zwischen einem hülsenförmigen, im Querschnitt die zentrale Längsachse 10 des Steckverbinders 1 ringförmig umgebenden ersten Wandabschnitt 8 und einem hülsenförmigen, im Querschnitt die zentrale Längsachse 10 ringförmig umgebenden zweiten Wandabschnitt 9 des Steckverbinders 1 liegt. Der erste Wandabschnitt 8 wird im gezeigten Ausführungsbeispiel vom zweiten Wandabschnitt 9 umgeben, d.h. der erste Wandabschnitt 8 liegt innerhalb des zweiten Wandabschnitts 9, und die Wandabschnitte 8, 9 liegen koaxial zueinander.

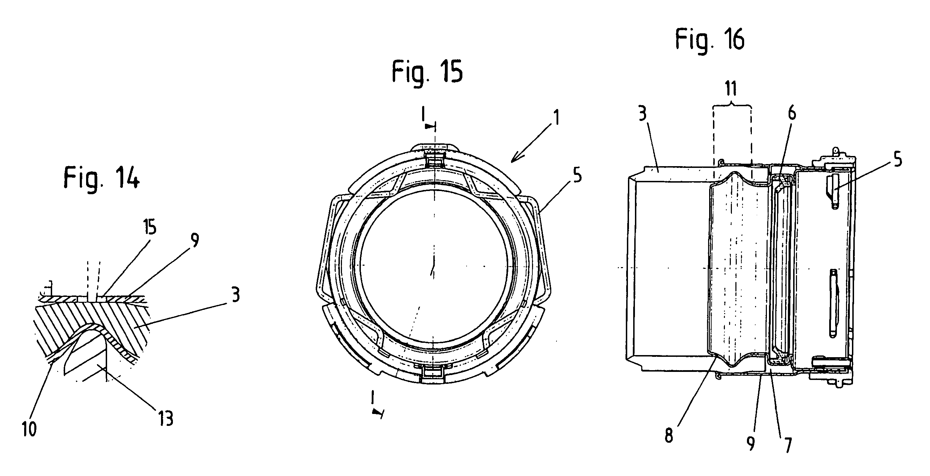

Zur Verbindung der Leitung 3 mit dem Steckverbinder 1 wird der Endabschnitt 2 der Leitung 3 von der der Einsteckseite des Steckverbinders 1 gegenüberliegenden Seite her in den Ringraum 7 eingeschoben und in der Folge wird der erste Wandabschnitt 8 in Richtung zum zweiten Wandabschnitt 9 verformt, indem in den ersten Wandabschnitt 8 eine Eindrückung 11 eingebracht wird. Dadurch wird der Endabschnitt 2 der Leitung 3 zwischen dem ersten und dem zweiten Wandabschnitt 8, 9 verquetscht (vgl. den fertiggestellten Zustand in den Fig. 15 und 16). Durch eine solche Verpressung des Steckverbinders 1 mit der Leitung 3 wird die Wandstärke des Endabschnitts 2 der Leitung 3 im Bereich der Eindrückung 11 verringert, insbesondere durch Fließen des Materials des Endabschnitts 2. Durch die im Endabschnitt 2 ausgebildete Vertiefung, in welche die Eindrückung 11 im ersten Wandabschnitt 8 ragt, wird eine formschlüssige Halterung der Leitung 3 im Steckverbinder 1 ausgebildet.

In dieser Weise mit einer Leitung 3 verbundene Steckverbinder 1 sind bekannt. Anstelle der nach außen gerichteten Verformung des innenliegenden Wandabschnitts 8 könnte auch der außenliegende Wandabschnitt 9 (der dann der "erste" Wandabschnitt wäre) nach innen verformt werden, wie dies ebenfalls bereits bekannt ist.

Vorzugsweise ist die Eindrückung 11 umlaufend, d.h. ringförmig ausgebildet. Auch mehrere Eindrückungen 11 an in Umfangsrichtung voneinander beabstandeten Stellen könnten vorgesehen sein.

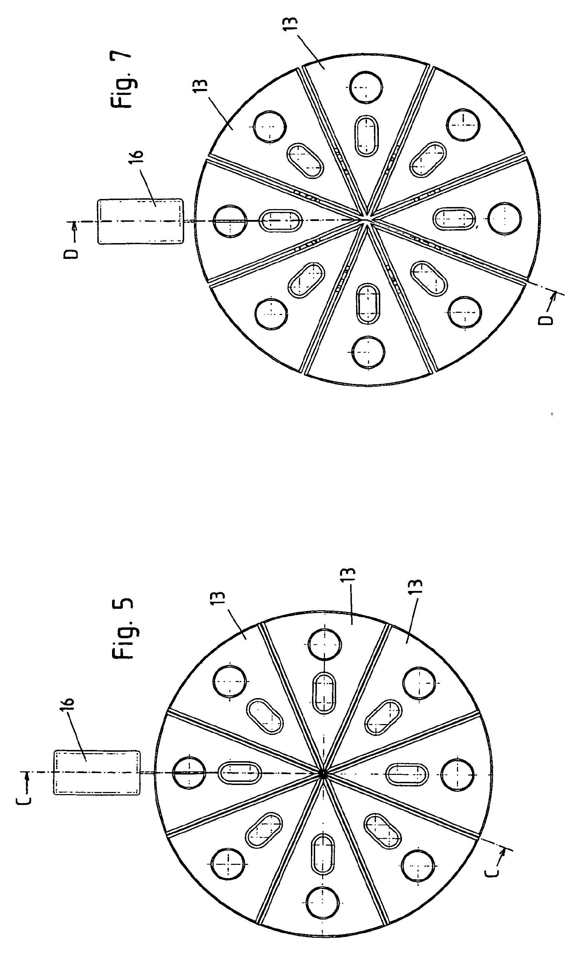

Die Ausbildung der Verbindung zwischen dem Steckverbinder 1 und der Leitung 3 wird im Folgenden anhand der Fig. 7 bis 14 erläutert.

Die im gezeigten Ausführungsbeispiel in Form einer umlaufenden Eindrückung 11 ausgebildete Verformung des ersten Wandabschnitts 8 wird mit einem von einem Motor 14 angetriebenen Drückwerkzeug 12 durchgeführt, welches gegen den ersten Wandabschnitt 8, hier radial nach außen, verfahrbare und diesen verformende Drückteile 13 aufweist. Das Drückwerkzeug 12 ist im gezeigten Ausführungsbeispiel der Erfindung, bei dem die Verformung von innen nach außen erfolgt somit als Spreizwerkzeug ausgebildet. Solche Drückwerkzeuge sind bekannt, beispielsweise aus dem in der Beschreibungseinleitung genannten Stand der Technik, sodass eine genauere Erläuterung der Ausbildung des Drückwerkzeugs 12 an dieser Stelle unterbleiben kann. Ebenso sind von außen nach innen wirkende Drückwerkzeuge bekannt.

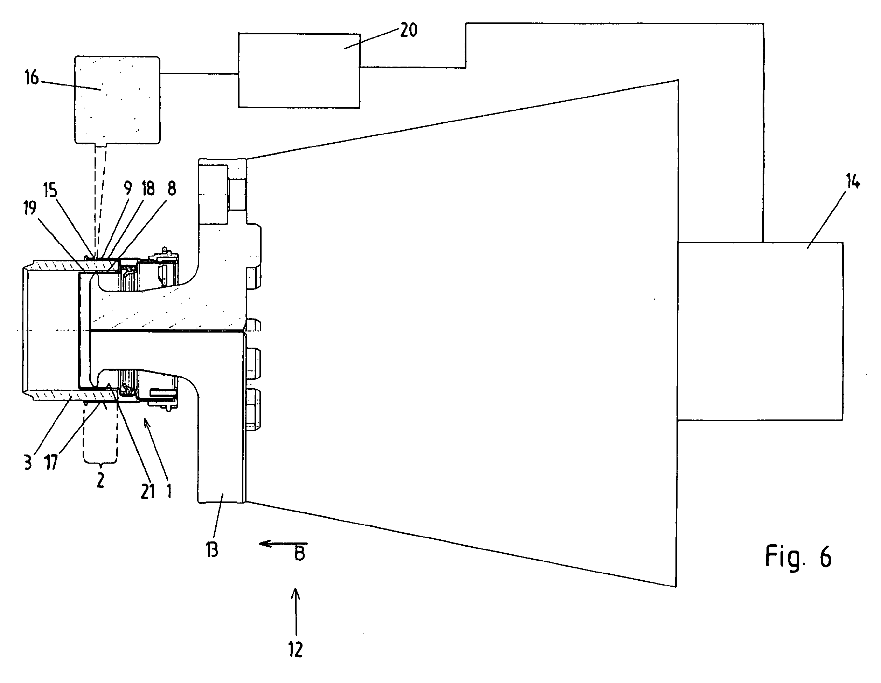

Nachdem der Endabschnitt 2 der Leitung 3 in den Ringraum 7 eingesteckt ist, wird der Steckverbinder 1 mit der eingesteckten Leitung 3 auf die Drückteile 13 des Drückwerkzeugs 12 aufgesteckt, vgl. Fig. 6.

Der zweite Wandabschnitt 9 ist mit mindestens einer Fensteröffnung 15 versehen. Die Fensteröffnung 15 befindet sich in einem Bereich des zweiten Wandabschnitts 9, der dem Bereich des ersten Wandabschnitts, welcher vom Drückwerkzeug 12 verformt wird, gegenüberliegt (bezogen auf die radiale Richtung des Steckverbinders 1).

Eine Abstandsmesseinrichtung 16 dient zur Erfassung der Oberfläche 17 des zweiten Wandabschnitts 9, die der Fensteröffnung 15 zugewandt ist (im gezeigten Ausführungsbeispiel ist dies also die äußere Oberfläche des Endabschnitts 2), und zwar durch die Fensteröffnung 15 hindurch. Mittels der Abstandsmesseinrichtung 16 kann der Ort (=die radiale Lage) der Oberfläche 17 im Bereich der Fensteröffnung 15 erfasst werden und somit durch (periodische) wiederholte Messungen oder eine kontinuierliche Messung mit der Abstandsmesseinrichtung 16 auch die Bewegung dieser Oberfläche 17.

Es kann beispielsweise eine optische Abstandsmesseinrichtung 16 eingesetzt werden, welche einen optischen Wegmesssensor aufweist. Der Bereich der Lichtabstrahlung bzw. des Lichtempfangs ist durch strichlierte Linien angedeutet. Eine solche optische Abstandsmesseinrichtung kann beispielsweise von einem Interferometer gebildet werden. Auch andere Abstandsmesseinrichtungen können eingesetzt werden, beispielsweise auf der Basis von Ultraschall arbeitende Abstandsmesseinrichtungen, mechanische Abstandsmesseinrichtungen, welche einen durch die Fensteröffnung 15 eingeführten Tastfühler verwenden, oder Abstandsmesseinrichtungen mit kapazitiven Sensoren.

Nachdem der Endabschnitt 2 der Leitung 3 in den Ringraum 7 eingeschoben worden ist, befinden sich im gezeigten Ausführungsbeispiel mehr oder weniger große spaltförmige Zwischenräume 19, 18 zwischen dem Endabschnitt 2 der Leitung 3 und dem ersten Wandabschnitt 8 und zwischen dem Endabschnitt 2 der Leitung 3 und dem zweiten Wandabschnitt 9. Die Zwischenräume 18, 19 können in Abhängigkeit von den vorliegenden Toleranzen, beispielsweise der Wandstärke des Endabschnitts 2 der Leitung 3 oder des inneren Durchmessers des Endabschnitts 2 der Leitung 3 variieren. Es könnte beispielsweise auch nur ein Zwischenraum 18 vorhanden sein (wenn der Endabschnitt 2 unter Vorspannung auf den ersten Wandabschnitt 8 aufgeschoben wird) oder nur ein Zwischenraum 19 vorhanden sein.

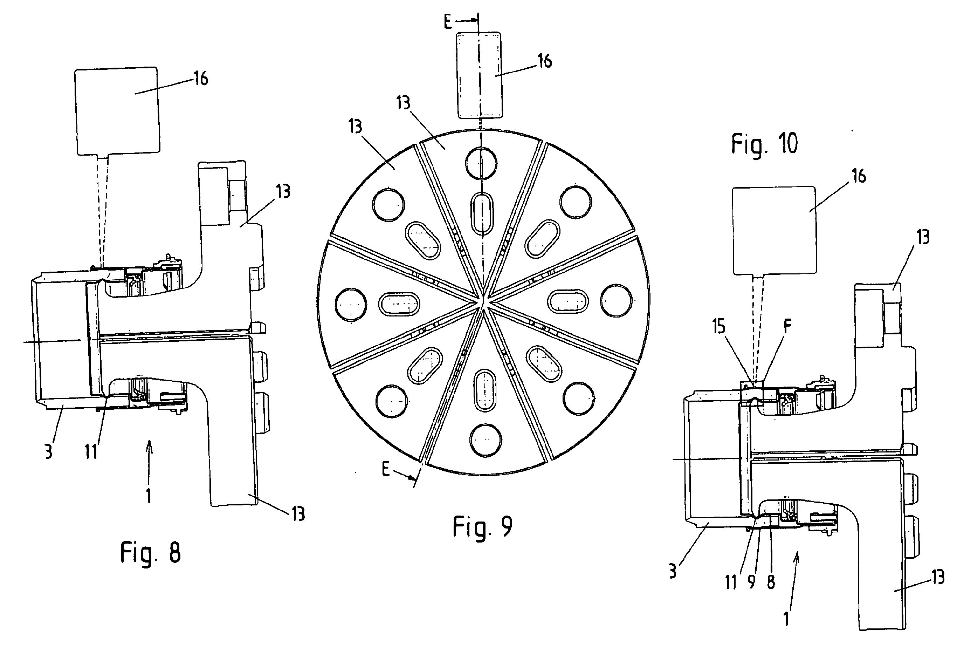

In der Folge werden die Drückteile 13 mehr und mehr radial nach außen gegen den ersten Wandabschnitt 8 verfahren, wobei sich nach und nach die hier ringförmige Eindrückung 11 ausbildet, vgl. Fig. 7 bis 14. Im Zustand entsprechend den Fig. 7 und 8 liegt der erste Wandabschnitt 8 im Bereich der eingebrachten Eindrückung 11 bereits am Endabschnitt 2 der Leitung an und der Zwischenraum 18 hat sich durch das nach außen Drücken des Endabschnitts 2 der Leitung 3 bereits verringert, die Oberfläche 17 des Endabschnitts 2 der Leitung 3 liegt aber auch im axialen Bereich der Eindrückung 11 noch nicht an der inneren Oberfläche des zweiten Wandabschnitts 9 an.

Beim weiteren Eindrücken kommt die Oberfläche 17 des Endabschnitts 2 im Bereich um die Fensteröffnung 15 in Anlage an die innere Oberfläche des zweiten Wandabschnitts 9. Dieser Zustand ist in den Fig. 9 bis 11 dargestellt.

Beim weiteren Eindrücken des ersten Wandabschnitts findet keine oder nahezu keine weitere Bewegung der Oberfläche 17 des Endabschnitts 2 in die Richtung radial nach außen statt.

Beim Verformen des ersten Wandabschnitts 8 ausgehend vom in den Fig. 5 und 6 dargestellten Zustand, wird ein jeweiliges Drückteil 13 bis zur Fertigstellung der Eindrückung 11 über einen Verformungsweg verfahren.

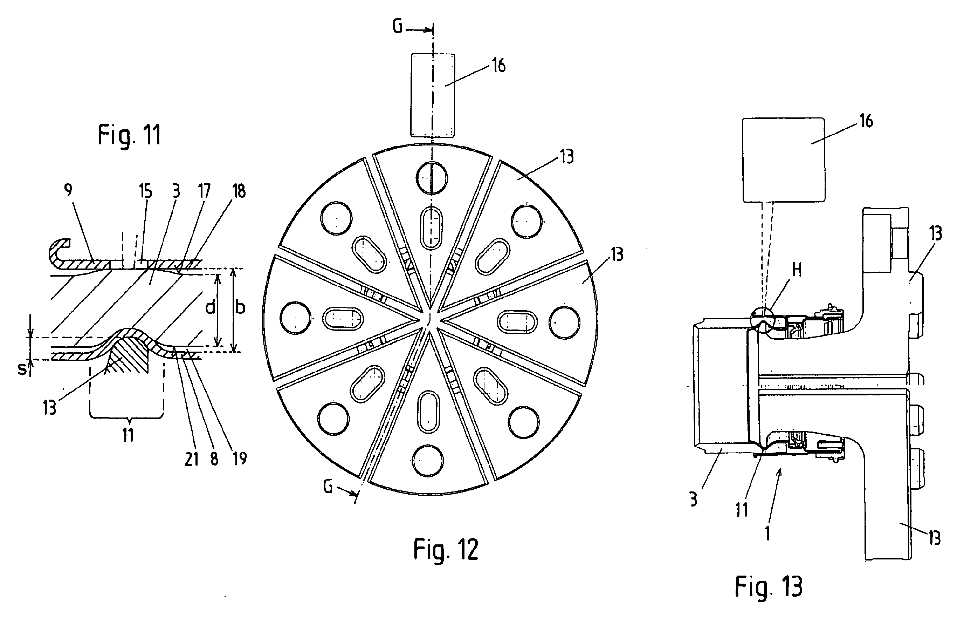

Die am Ende des Verformungsweges fertig ausgebildete Eindrückung 11 ist in den Fig. 12 bis 14 dargestellt.

Die Bewegung der Oberfläche 17 wird während des Verformens des ersten Wandabschnitts 8 durch eine kontinuierliche Messung oder durch wiederholte Messungen mit der Abstandsmesseinrichtung 16 beobachtet. Sobald keine oder nahezu keine Bewegung der Oberfläche 17 mehr festgestellt wird, die Geschwindigkeit der Oberfläche 17 also auf Null oder unter einen unteren Schwellenwert abgesunken ist, wird die dann vorliegende Stellung der Drückteile 13 als Referenzpunkt innerhalb des Verformungsweges festgelegt.

Ausgehend von diesem Referenzpunkt werden die Drückteile 13 von der Steuereinheit 20 noch einen definierten Weg radial nach außen verfahren, um die gewünschte Verquetschung des Endabschnitts 2 zwischen dem ersten und zweiten Wandabschnitt 8, 9 zu erreichen. Sobald der Referenzpunkt erreicht ist, wird somit für das weitere Verformen des ersten Wandabschnitts 8 durch die Drückteile 13 eine Wegsteuerung bzw. Wegregelung der Drückteile 13 durchgeführt.

Der nach Erreichen des Referenzpunktes noch zurückzulegende Verformungsweg kann beispielsweise ein vorgegebener Wert sein, der von der in die Steuereinheit 20 eingegebenen nominalen Wandstärke des Endabschnitts 2 der Leitung 3 abhängt. Beträgt beispielsweise der nominale Wert der Wandstärke (also ohne Berücksichtigung von Toleranzen) 4mm, so kann als Verformungsweg ab dem Referenzpunkt beispielsweise ein Wert von 2mm von der Steuereinheit 20 angesetzt werden.

Andererseits kann der ab dem Referenzpunkt noch zurückzulegende Verformungsweg auch von der Lage des Referenzpunktes im Verformungsweg abhängen. Aus der Lage des Referenzpunktes im Verformungsweg, also aus der Strecke, die das Drückteil 13 zurückgelegt hat, welches die Eindrückung 11 im der Fensteröffnung 15 gegenüberliegenden Bereich ausgebildet hat, kann die tatsächliche Wandstärke des Endabschnitts 2 der Leitung 3 bestimmt werden (mit relativ hoher Genauigkeit). Die Wandstärke d des Endabschnitts 2 ergibt sich aus dem radialen Abstand b zwischen dem ersten Wandabschnitt 8 und dem zweiten Wandabschnitt 9 abzüglich dem vom Drückteil 13 von der Anlage am ersten Wandabschnitt 8 bis zum Referenzpunkt gefahrenen Weg s. Gegebenenfalls kann noch ein gewisser (als in den einzelnen Verpressvorgängen konstant angenommener und damit vorbekannter) Überlapp abgezogen werden, der sich aus einer Einwölbung der äußeren Oberfläche 17 in den Bereich der Fensteröffnung 15 ergibt.

Beispielsweise können die Drückteile 13 ab dem Referenzpunkt noch um einen Weg radial nach außen verfahren werden, der der Hälfte der so bestimmten Wandstärke des Endabschnitts 2 der Leitung 3 entspricht.

Die Fig. 15 und 16 zeigen den fertiggestellten Zustand des Steckverbinders 1.

Falls mehrere in Umfangsrichtung voneinander beabstandete Abstandsmesseinrichtungen 16 eingesetzt werden, welche jeweils mit einer separaten Fensteröffnung 19 im zweiten Wandabschnitt 9 zusammenwirken, könnte der Referenzpunkt im Verformungsweg beispielsweise aus einer Mittelung der Messungen der einzelnen Abstandsmesseinrichtungen 16 ermittelt werden.

Im zuvor beschriebenen ersten Ausführungsbeispiel wird somit mittels der Abstandsmesseinrichtung 16 erfasst, wann beim Verformen des ersten Wandabschnitts 8 der Endabschnitt 2 der Leitung 3 an den zweiten Wandabschnitt 9 zur Anlage gelangt, um ab diesem Punkt des Verformungsweges eine Wegsteuerung bzw. Wegregelung für das weitere Verformen des ersten Wandabschnitts 8 durchzuführen. In einem demgegenüber modifizierten zweiten Ausführungsbeispiel könnte mittels der Abstandsmesseinrichtung 16 auch erfasst werden, an welchem Punkt innerhalb des Verformungsweges der erste Wandabschnitt 8 zur Anlage an die dem ersten Wandabschnitt 8 zugewandte Oberfläche 21 des Endabschnitts 2 gelangt, im gezeigten Ausführungsbeispiel ist dies die innere Oberfläche 21. Hierzu wird mit der Abstandsmesseinrichtung 16 die Bewegung der der Fensteröffnung 15 zugewandten Oberfläche 17 des Endabschnitts 2 erfasst. Sobald diese Bewegung synchron zur Bewegung des die Eindrückung 11 im der Fensteröffnung 15 gegenüberliegenden Bereich ausbildenden Drückteils 13 ist, d.h. die Oberfläche 17 und das Drückteil 13 haben zwischen zwei Messungen den gleichen Weg zurückgelegt bzw. ihre Geschwindigkeiten sind gleich, wird die dann vorliegende Stellung des Drückteils 13 als Referenzpunkt innerhalb des Verformungsweges festgelegt. Die Bewegung der Drückteile 13 kann beispielsweise aus der Bewegung des Motors 14 oder aus Signalen von den Drückteilen 13 zugeordneten Sensoren abgeleitet werden.

Zu dem Zeitpunkt, an dem dieser Referenzpunkt im Verformungsweg erreicht ist, wird weiters mittels der Abstandsmesseinrichtung 16 der Abstand der Oberfläche 17 des Endabschnitts 2 vom zweiten Wandabschnitt 9 bestimmt. Wenn die Lage des zweiten Wandabschnitts 9 als konstant angesetzt wird (d.h. dessen Toleranzen, die im Allgemeinen wesentlich geringer als die Toleranzen der Leitung 3 sind, werden vernachlässigt), so kann dieser Abstand allein durch die Messung des Abstands der Oberfläche 17 von der Abstandsmesseinrichtung 16, wodurch der Ort (=die radiale Lage) der Oberfläche 17 erfasst wird, bestimmt werden. Andererseits könnte zusätzlich mittels der Abstandsmesseinrichtung 16 oder einer weiteren (in den Fig. nicht dargestellten Abstandsmesseinrichtung) der Ort der vom Endabschnitt 2 abgewandten Oberfläche des zweiten Wandabschnitts 9, im gezeigten Ausführungsbeispiel ist dies die äußere Oberfläche des zweiten Wandabschnitts 9, erfasst werden. Dadurch können auch Toleranzen im Umfang des zweiten Wandabschnitts 2 ausgeglichen werden.

Ab dem ermittelten Referenzpunkt im Verformungsweg werden die Drückteile 13 von der Steuereinheit 20 wiederum einen definierten Weg radial nach außen verfahren, um die gewünschte Verquetschung des Endabschnitts 2 zwischen dem ersten und dem zweiten Wandabschnitt 8, 9 zu erreichen. Dieser Weg setzt sich zusammen aus einem dem Abstand zwischen der Oberfläche 17 und dem zweiten Wandabschnitt 9 entsprechenden ersten Teilabschnitt und einem zweiten Teilabschnitt. Der zweite Teilabschnitt kann hierbei in der gleichen Weise festgesetzt werden, wie dies im ersten Ausführungsbeispiel für den gesamten ab dem Referenzpunkt zu verfahrenden Weg beschrieben ist.

In einem dritten Ausführungsbeispiel der Erfindung sind der Endabschnitt 2 der Leitung 3 und der erste Wandabschnitt 8 so ausgebildet, dass im gesamten Toleranzbereich ein Aufschieben des Endabschnitts 2 auf den ersten Wandabschnitt 8 unter (einer mehr oder weniger großen) Vorspannung erfolgt. Es ist also kein Zwischenraum 19 sondern nur ein (mehr oder weniger großer) Zwischenraum 18 vorhanden. Dieses Ausführungsbeispiel entspricht dem zuvor beschriebenen zweiten Ausführungsbeispiel, wenn der Referenzpunkt auf den Anfangspunkt im Verformungsweg gesetzt wird, an welchem die Drückteile 13 vor Ausbildung einer Eindrückung 11 am ersten Wandabschnitt 8 anliegen. Es wird also mit Hilfe der Abstandsmesseinrichtung 16 die Größe des Zwischenraums 19 bestimmt und eine Wegsteuerung bzw. Wegregelung des Verformungsweges wird durchgeführt, die der Wegsteuerung bzw. Wegregelung des zweiten Ausführungsbeispiels ab dem Referenzpunkt entspricht.

In allen beschriebenen Ausführungsbeispielen könnten auch mehrere in axialer Richtung des Steckverbinders 1 voneinander beabstandete Eindrückungen 11 vorgesehen werden.

Wie bereits erwähnt, könnte die mindestens eine Eindrückung 11 auch von außen nach innen eingebracht werden. Der die Eindrückung aufweisende erste Wandabschnitt wäre dann der äußere Wandabschnitt, der den inneren zweiten Wandabschnitt (und den Endabschnitt 2 der Leitung 3) umgibt. In den ersten beiden Ausführungsbeispielen würde dieser innere zweite Wandabschnitt dann die mindestens eine Fensteröffnung aufweisen, durch welche die Messung erfolgt. Im dritten beschriebenen Ausführungsbeispiel würde die Fensteröffnung, durch die die Erfassung der Oberfläche der Leitung erfolgt, im äußeren ersten Wandabschnitt ausgebildet werden. Diese Fensteröffnung würde von den Drückteilen freigehalten werden (z. B. durch Ausbildung einer entsprechenden Ausnehmung in mindestens einem der Drückteile), um die Messung mit der Abstandsmesseinrichtung durch die Fensteröffnung hindurch zu ermöglichen.

Grundsätzlich denkbar und möglich wäre es in einer Modifikation des dritten Ausführungsbeispiels auch, die Leitung unter Vorspannung in den außenliegenden Wandabschnitt einzudrücken, wobei die Messung dann durch eine im innenliegenden Wandabschnitt vorgesehene Fensteröffnung erfolgen würde und die Verformung von außen oder von innen durchgeführt werden könnte.

In allen beschriebenen Ausführungsformen besteht zumindest der erste Wandabschnitt, der vom Drückwerkzeug 12 in Richtung zum zweiten Wandabschnitt verformt wird aus ei-nem plastisch verformbaren Material, insbesondere Metall. Eine Ausbildung aus einem gebogenen Blech ist bevorzugt.

Der zweite Wandabschnitt kann ebenfalls aus Metall bestehen, beispielsweise kann der zweite Wandabschnitt (wie in den Fig. dargestellt) von einem gebogenen Blechteil gebil-det werden, welches mit dem ersten Wandabschnitt einstückig ausgebildet ist oder starr mit diesem verbunden ist. Der zweite Wandabschnitt kann aber auch aus einem anderen Material als Metall bestehen und muss auch nicht plastisch verformbar sein.

Der erste Wandabschnitt, in dem die mindestens eine Eindrückung 11 ausgebildet wird (und der innerhalb oder außerhalb des zweiten Wandabschnitts liegen kann) kann auch von einem separaten Ring gebildet werden (dieser könnte auch als Hülse bezeichnet wer-den). Dieser kann im Vergleich zum Gehäuse des Steckverbinders 1, das dann den zweiten Wandabschnitt (nicht aber den ersten Wandabschnitt) umfasst, eine relativ kleine axiale Ausdehnung aufweisen. Falls der erste Wandabschnitt außen liegt (d.h. die Verformung wird von außen nach innen durchgeführt), würde die Leitung auf den zweiten Wandab-schnitt aufgeschoben und darüber der separate Ring geschoben, der den ersten Wandabschnitt bildet. Dann würde der den ersten Wandabschnitt bildende Ring im Umfang mit Hilfe eines in Form eines Press- bzw. Reduzierwerkzeugs ausgebildeten Drückwerkzeugs im Durchmesser verkleinert (zusammengedrückt), wodurch die Leitung geklemmt wird. Die Leitung wird hierbei über die gesamte axiale Erstreckung des Rings verformt. Der Ring könnte auch über nur einen Teil seiner axialen Ausdehnung verformt werden, sodass eine Eindrückung im Ring ausgebildet wird. Analog könnte, wenn der Ring innen liegt (d.h. die Verformung von innen nach außen durchgeführt wird), die Leitung in den zweiten Wand-abschnitt eingeschoben werden und in der Folge der den ersten Wandabschnitt bildende Ring in den Endabschnitt 2 der Leitung 3 eingeschoben werden, worauf der erste Wand-abschnitt mit Hilfe eines Press- bzw. Spreizwerkzeuges im Durchmesser vergrößert und die Leitung geklemmt werden könnte. Der Ring könnte auch in diesem Fall nur über einen Teil seiner axialen Erstreckung verformt werden, sodass eine Eindrückung im Ring ausgebildet wird.

Alternativ könnte der zweite Wandabschnitt (der innerhalb oder außerhalb des ersten Wandabschnitts liegen kann) von einem separaten Ring gebildet werden. Dieser kann im Vergleich zum Gehäuse des Steckverbinders 1, das dann den ersten Wandabschnitt (aber nicht den zweiten Wandabschnitt) umfassen würde, eine relativ kleine axiale Ausdehnung aufweisen.

Wenn der erste und der zweite Wandabschnitt einstückig miteinander ausgebildet sind oder starr miteinander verbunden sind, so umfasst das Steckergehäuse sowohl den ersten Wandabschnitt als auch den zweiten Wandabschnitt.

Auch, insbesondere axial, voneinander beabstandete Eindrückungen, von denen mindestens eine von außen und von denen mindestens eine von innen eingebracht wird, sind denkbar und möglich.

Mittels eines erfindungsgemäßen Steckverbinders 1 können insbesondere Verbindungen von Abschnitten von Kühlwasserleitungen von Verbrennungsmotoren oder Ladeluftleitungen von Verbrennungsmotoren hergestellt werden. In solchen herrscht ein Druck von bei-spielsweise bis 6bar.

### Legende zu den Hinweisziffern:

- 1: Steckverbinder
- 2: Endabschnitt
- 3: Leitung
- 4: Gegensteckverbinder
- 4a: Rastschulter
- 5: Rastfeder
- 6: Dichtung
- 7: Ringraum
- 8: erster Wandabschnitt
- 9: zweiter Wandabschnitt
- 10: Längsachse
- 11: Eindrückung
- 12: Drückwerkzeug
- 13: Drückteil
- 14: Motor
- 15: Fensteröffnung
- 16: Abstandsmesseinrichtung
- 17: Oberfläche
- 18: Zwischenraum
- 19: Zwischenraum
- 20: Steuereinheit
- 21: Oberfläche

## Patentansprüche

1. Verfahren zum Verbinden eines Endabschnitts (2) einer Leitung (3) für flüssige oder gasförmige Medien mit einem Steckverbinder (1), wobei ein erster Wandabschnitt (8) des Steckverbinders (1) unter Verformung des zwischen dem ersten und einem zweiten Wandabschnitt (8, 9) des Steckverbinders (1) liegenden Endabschnitts (2) der Leitung (3) mit einem Drückwerkzeug (12) in Richtung zum zweiten Wandabschnitt (9) verformt wird, **dadurch gekennzeichnet, dass** vor dem Verformen und/oder beim Verformen des ersten Wandabschnitts (8) mit mindestens einer Abstandsmesseinrichtung (16) durch eine im ersten oder zweiten Wandabschnitt (8, 9) angeordnete Fensteröffnung (15) hindurch die der Fensteröffnung (15) zugewandte Oberfläche der Leitung (3) erfasst wird und die Verformung des ersten Wandabschnitts (8) in Abhängigkeit vom Ergebnis der mit der Abstandsmesseinrichtung (16) durchgeführten Erfassung der Oberfläche (21) des Endabschnitts (2) der Leitung (3) durchgeführt wird.

2. Verfahren nach Anspruch 1, **dadurch gekennzeichnet, dass** beim Verformen des ersten Wandabschnitts (8) mittels der Abstandsmesseinrichtung (16) die Bewegung der der Fensteröffnung (15) zugewandten Oberfläche (17) des Endabschnitts (2) der Leitung (3) erfasst wird.

3. Verfahren nach Anspruch 2, **dadurch gekennzeichnet, dass** beim Verformen des ersten Wandabschnitts (8) mindestens ein Drückteil (13) des Drückwerkzeuges (12) über einen Verformungsweg verfahren wird und dass durch die im zweiten Wandabschnitt (9) angeordnete Fensteröffnung (15) die Bewegung der der Fensteröffnung (15) zugewandten Oberfläche (17) des Endabschnitts (2) der Leitung (3) erfasst wird und hierbei ein Punkt im Verformungsweg ermittelt wird, an welchem die der Fensteröffnung (15) zugewandten Oberfläche (17) des Endabschnitts (2) der Leitung (3) zur Anlage im Bereich um die Fensteröffnung (15) am zweiten Wandabschnitt (9) gelangt, und dass das mindestens eine Drückteil (13) ab diesem Punkt des Verformungsweges über eine vorgegebene oder über eine während des Verformens des ersten Wandabschnitts (8) bestimmte Wegstrecke verfahren wird.

4. Verfahren nach Anspruch 2, **dadurch gekennzeichnet, dass** beim Verformen des ersten Wandabschnitts (8) mindestens ein Drückteil (13) des Drückwerkzeuges (12) über einen Verformungsweg verfahren wird und dass durch die im zweiten Wandabschnitt (9) angeordnete Fensteröffnung (15) die Bewegung der der Fensteröffnung (15) zugewandten Oberfläche (17) des Endabschnitts (2) der Leitung (3) erfasst wird und hierbei ein Punkt im Verformungsweg ermittelt wird, an welchem sich die der Fensteröffnung (15) zugewandte Oberfläche (17) des Endabschnitts (2) der Leitung (3) synchron zum Drückteil (13) bewegt, und dass weiters an diesem Punkt des Verformungsweges mittels der Abstandsmesseinrichtung (16) der Ort der der Fensteröffnung (15) zugewandten Oberfläche (17) des Endabschnitts (2) der Leitung (3) erfasst wird und das Drückteil (13) ab diesem Punkt des Verformungsweges über eine Wegstrecke verfahren wird, die vom erfassten Ort der der Fensteröffnung (15) zugewandten Oberfläche (17) des Endabschnitts (2) der Leitung (3) abhängt.

5. Verfahren nach Anspruch 1, **dadurch gekennzeichnet, dass** vor dem Verformen des ersten Wandabschnitts (8) mittels der Abstandsmesseinrichtung (16) der Ort der der Fensteröffnung (15) zugewandten Oberfläche (17) des Endabschnitts (2) der Leitung (3) erfasst wird.

6. Verfahren nach Anspruch 5, **dadurch gekennzeichnet, dass** vor der Erfassung der der Fensteröffnung (15) zugewandten Oberfläche (17) des Endabschnitts (2) der Leitung (3) der Endabschnitt (2) der Leitung (3) unter Vorspannung auf den ersten Wandabschnitt (8) aufgeschoben wird.

7. Verfahren nach einem der Ansprüche 1 bis 6, **dadurch gekennzeichnet, dass** vor der Erfassung der der Fensteröffnung (15) zugewandten Oberfläche (17) des Endabschnitts (2) der Leitung (3) der Steckverbinder (1) auf das Drückwerkzeug (12) aufgeschoben oder in das Drückwerkzeug (12) eingeschoben wird.

8. Verfahren nach einem der Ansprüche 1 bis 7, **dadurch gekennzeichnet, dass** der radiale Abstand zwischen dem ersten und dem zweiten Wandabschnitt (8, 9) im Bereich der Verformung des ersten Wandabschnitts (8) auf einen Wert verringert wird, der mindestens 30% kleiner als die durch die Erfassung der der Fensteröffnung (15) zugewandten Oberfläche (17) des Endabschnitts (2) der Leitung (3) mittels der Abstandsmesseinrichtung (16) bestimmten Wandstärke des Endabschnitts (2) der Leitung (3) ist.

9. Verfahren der Ansprüche 1 bis 8, **dadurch gekennzeichnet, dass** der erste Wandabschnitt (8) vom zweiten Wandabschnitt (9) umgeben wird und dass das Verformen des ersten Wandabschnitts (8) mit einem Spreizwerkzeug erfolgt.

10. Vorrichtung zum Verbinden eines Endabschnitts (2) einer Leitung (3) für flüssige oder gasförmige Medien mit einem Steckverbinder (1), der einen ersten Wandabschnitt (8) und einen zweiten Wandabschnitt (9) aufweist, zwischen denen der Endabschnitt (2) der Leitung (3) befestigbar ist, umfassend ein Drückwerkzeug (12) zum Verformen des ersten Wandabschnitts (8) in Richtung zum zweiten Wandabschnitt (9) unter Verformung des zwischen dem ersten und dem zweiten Wandabschnitt (8, 9) liegenden Endabschnitts (2) der Leitung (3), **dadurch gekennzeichnet, dass** die Vorrichtung mindestens eine Abstandsmesseinrichtung (16) aufweist, von der durch eine im ersten oder zweiten Wandabschnitt (8, 9) angeordnete Fensteröffnung (15) hindurch die der Fensteröffnung (15) zugewandte Oberfläche (17) des Endabschnitts (2) der Leitung (3) erfassbar ist.

## Claims

1. Method for connecting an end section (2) of a pipe (3) for liquid or gaseous media with a plug connector (1), with a primary wall section (8) of the plug connector (1) being deformed in direction towards the secondary wall section (9)under deformation of the end section (2) of the pipe (3) lying between the primary and secondary wall section (8, 9) of the plug connector (1) with a spinning tool (12), **characterized in that** before deforming and/or when deforming the primary wall section (8) the surface of the pipe (3) facing the window opening (15) is measured by means of at least one distance measuring unit (16) through a window opening (15) arranged in the primary or secondary wall section (8, 9) and the deformation of the primary wall section (8) is performed depending on the result of measuring the surface (21) of the end section (2) of the pipe (3) carried out by means of distance measuring unit (16).

2. Method according to claim 1, **characterized in that** during deforming the primary wall section (8) the movement of the surface (17) of the end section (2) of the pipe (3) facing the window opening (15) is measured by means of the distance measuring unit (16).

3. Method according to claim 2, **characterized in that** when deforming the primary wall section (8), at least one spinning part (13) of the spinning tool (12) is moved across a deformation path and that the movement of the surface (17) of the end section (2) of the pipe (3) facing the window opening (15) is measured through the window opening (15) arranged in the secondary wall section (9) and at this, a point in the deformation path is determined, where the surface (17) of the end section (2) of the pipe (3) facing the window opening (15) is abutting in the area around the window opening (15) in the secondary wall section (9) and that from this point of the deformation path, the at least one spinning part (13) is moved across a predetermined distance or a distance determined while deforming the primary wall section (8).

4. Method according to claim 2, **characterized in that** when deforming the primary wall section (8) at least one spinning part (13) of the spinning tool (12) is moved across a deformation path and that the movement of the surface (17) of the end section (2) of the pipe (3) facing the window opening (15) is measured through the window opening (15) arranged in the secondary wall section (9) and at this, a point in the deformation path is determined, where the surface (17) of the end section (2) of the pipe (3) facing the window opening (15) is moving synchronously with the spinning part (13) and that furthermore at this point of the deformation path the place of the surface (17) of the end section (2) of the pipe (3) facing the window opening (15) is determined by means of the distance measuring unit (16) and from this point of the deformation path, the spinning part (13) is moved across a distance that depends on the measured place of the surface (17) of the end section (2) of the pipe (3) facing the window opening (15).

5. Method according to claim 1, **characterized in that** before deforming the primary wall section (8), the place of the surface (17) of the end section (2) of the pipe (3) facing the window opening (15) is determined by means of the distance measuring unit (16).

6. Method according to claim 5, **characterized in that** before the surface (17) of the end section (2) of the pipe (3) is determined, the end section (2) of the pipe (3) is pushed onto the primary wall section (8) under pretension.

7. Method according to one of the claims 1 to 6, **characterized in that** before the surface (17) of the end section (2) of the pipe (3) facing the window opening (15) is determined, the plug connector (1) is pushed onto the spinning tool (12) or into the spinning tool (12).

8. Method according to one of the claims 1 to 7, **characterized in that** the radial distance between the primary and the secondary wall section (8, 9) in the region of the deformation of the primary wall section (8) is reduced to a value that is at least 30% lower than the wall thickness of the end section (2) of the pipe (3) determined by measuring the surface of the end section (2) of the pipe (3) facing the window opening (15) by means of the distance measuring unit (16).

9. Method according to clams 1 to 8, **characterized in that** the primary wall section (8) is surrounded by the secondary wall section (9) and that the deformation of the primary wall section (8) is carried out by means of a spreading tool.

10. Device for connecting an end section (2) of a pipe (3) for liquid or gaseous media with a plug connector (1) having a primary wall section (8) and a secondary wall section (9) between which the end section (2) of the pipe (3) can be attached, comprising a spinning tool (12) for deforming the primary wall section (8) in a direction towards the secondary wall section (9) under deformation of the end section (2) of the pipe (3) lying between the primary and the secondary wall section (8, 9), **characterized in that** the device has at least one distance measuring unit (16) by means of which the surface (17) of the end section (2) of the pipe (3) facing the window opening (15) can be measured through the window opening (15) arranged in the primary or secondary wall section (8, 9).

## Revendications

1. Procédé permettant d'assembler une zone d'extrémité (2) d'une conduite (3) pour milieux liquides ou gazeux à un raccord mâle (1), une première partie de paroi (8) dudit raccord mâle (1) étant déformée vers une deuxième partie de paroi (9) par un outil à emboutir (12) moyennant la déformation de la zone d'extrémité (2) de la conduite (3), située entre la première partie de paroi (8) et une deuxième partie de paroi (9) du raccord mâle (1), **caractérisé en ce que**, avant le processus de déformation et/ou pendant le processus de déformation de la première partie de paroi (8), au moins un dispositif de mesure de distance (16) permet de détecter à travers une ouverture formant fenêtre (15), ménagée dans la première ou la deuxième partie de paroi (9), la surface de la conduite (3), orientée vers ladite ouverture formant fenêtre (15), et la première partie de paroi (8) est déformée en fonction du résultat de la détection, effectuée au moyen du dispositif de mesure de distance (16), de la surface (21) de la zone d'extrémité (2) de la conduite (3).

2. Procédé selon la revendication 1, **caractérisé en ce que** pendant le processus de déformation de la première partie de paroi (8), le dispositif de mesure de distance (16) permet de détecter le mouvement de la surface (17) de la zone d'extrémité (2) de la conduite (3), orientée vers l'ouverture formant fenêtre (15).

3. Procédé selon la revendication 2, **caractérisé en ce que** pendant le processus de déformation de la première partie de paroi (8), au moins un élément de compression (13) de l'outil à emboutir (12) est déplacé sur un trajet de déformation et **en ce que** le mouvement de la surface (17) de la zone d'extrémité (2) de la conduite (3), orientée vers l'ouverture formant fenêtre (15), est détecté à travers l'ouverture formant fenêtre (15) ménagée dans la deuxième partie de paroi (9), et, à cette occasion, est déterminé dans le trajet de déformation un point, au niveau duquel la surface (17) de la zone d'extrémité (2) de la conduite (3), orientée vers l'ouverture formant fenêtre (15), vient en appui sur la deuxième partie de paroi (9) dans la zone autour de l'ouverture formant fenêtre (15), et **en ce que** ledit au moins un élément de compression (13) est déplacé à partir de ce point du trajet de déformation sur un tronçon prédéfini ou sur un tronçon déterminé pendant le processus de déformation de la première partie de paroi (8).

4. Procédé selon la revendication 2, **caractérisé en ce que** pendant le processus de déformation de la première partie de paroi (8), au moins un élément de compression (13) de l'outil à emboutir (12) est déplacé sur un trajet de déformation et **en ce que** le mouvement de la surface (17) de la zone d'extrémité (2) de la conduite (3), orientée vers l'ouverture formant fenêtre (15), est détecté à travers l'ouverture formant fenêtre (15) ménagée dans la deuxième partie de paroi (9), et, à cette occasion, est déterminé dans le trajet de déformation un point, au niveau duquel la surface (17) de la zone d'extrémité (2) de la conduite (3), orientée vers l'ouverture formant fenêtre (15), se déplace de manière synchrone avec l'élément de compression (13), et **en ce que**, en outre, au niveau de ce point du trajet de déformation, le lieu de la surface (17) de la zone d'extrémité (2) de la conduite (3), orientée vers l'ouverture formant fenêtre (15), est détecté au moyen du dispositif de mesure de distance (16), et l'élément de compression (13) est déplacé à partir de ce point du trajet de déformation sur un tronçon qui dépend du lieu déterminé sur la surface (17) de la zone d'extrémité (2) de la conduite (3), orientée vers l'ouverture formant fenêtre (15).

5. Procédé selon la revendication 1, **caractérisé en ce que**, avant le processus de déformation de la première partie de paroi (8), le lieu de la surface (17) de la zone d'extrémité (2) de la conduite (3), orientée vers l'ouverture formant fenêtre (15), est détecté au moyen du dispositif de mesure de distance (16).

6. Procédé selon la revendication 5, **caractérisé en ce que**, avant la détection de la surface (17) de la zone d'extrémité (2) de la conduite (3), orientée vers l'ouverture formant fenêtre (15), la zone d'extrémité (2) de la conduite (3) est emmanchée sous précontrainte sur la première partie de paroi (8).

7. Procédé selon l'une quelconque des revendications 1 à 6, **caractérisé en ce que**, avant la détection de la surface (17) de la zone d'extrémité (2) de la conduite (3), orientée vers l'ouverture formant fenêtre (15), le raccord mâle (1) est emmanché sur l'outil à emboutir (12) ou est inséré dans l'outil à emboutir (12).

8. Procédé selon l'une quelconque des revendications 1 à 7, **caractérisé en ce que** la distance radiale entre la première et la deuxième partie de paroi (8,9) dans la zone de la déformation de la première partie de paroi (8) est diminuée à une valeur qui est au moins 30 % inférieure à l'épaisseur de paroi de la zone d'extrémité (2) de la conduite (3), déterminée par la détection de la surface (17) de la zone d'extrémité (2) de la conduite (3), orientée vers l'ouverture formant fenêtre (15), au moyen du dispositif de mesure de distance (16).

9. Procédé selon l'une quelconque des revendications 1 à 8, **caractérisé en ce que** la première partie de paroi (8) est entourée par la deuxième partie de paroi (9) et **en ce que** le processus de déformation de la première partie de paroi (8) est mis en oeuvre au moyen d'un outil d'écartement.

10. Dispositif permettant d'assembler une zone d'extrémité (2) d'une conduite (3) pour milieux liquides ou gazeux à un raccord mâle (1), qui comporte une première partie de paroi (8) et une deuxième partie de paroi (9), entre lesquelles peut être fixée la zone d'extrémité (2) de la conduite (3), comportant un outil à emboutir (12) destiné à déformer la première partie de paroi (8) vers la deuxième partie de paroi (9) moyennant la déformation de la zone d'extrémité (2) de la conduite (3), située entre la première et la deuxième partie de paroi (8,9), **caractérisé en ce que** ledit dispositif comporte au moins un dispositif de mesure de distance (16) qui permet de détecter à travers une ouverture formant fenêtre (15), ménagée dans la première ou la deuxième partie de paroi (8, 9), la surface (17) de la zone d'extrémité (2) de la conduite (3), orientée vers ladite ouverture formant fenêtre (15).
